Europäisches Patentamt

European Patent Office

Office européen des brevets

(19)

(11) Veröffentlichungsnummer: **0 004 867**

**B1**

(12)                    **EUROPÄISCHE PATENTSCHRIFT**

(45) Veröffentlichungstag der Patentschrift: **03.02.82**

(51) Int. Cl.³: **H 04 M 1/53**

(21) Anmeldenummer: **79100775.0**

(22) Anmeldetag: **15.03.79**

(54) Schaltungsanordnung für Teilnehmerapparate in Fernsprechnebenstellenanlagen mit tonfrequenter Tastwahl.

(30) Priorität: **15.04.78 DE 2816436**
**15.07.78 DE 2831145**

(43) Veröffentlichungstag der Anmeldung:
**31.10.79 Patentblatt 79/22**

(45) Bekanntmachung des Hinweises auf die Patenterteilung:
**03.02.82 Patentblatt 82/5**

(84) Benannte Vertragsstaaten:
**BE FR IT NL**

(56) Entgegenhaltungen:
**DE - A - 2 432 452**
**DE - A - 2 506 122**
**DE - B - 1 201 417**
**DE - B - 1 233 026**
**GB - A - 1 307 266**
**US - A - 3 778 556**

(73) Patentinhaber: **Telefonbau und Normalzeit GmbH**
**Mainzer Landstrasse 128-146 Postfach 4432**
**D-6000 Frankfurt (Main) (DE)**

(72) Erfinder: **Glemser, Jürgen**
**Hegelstrasse 47**
**D-6079 Sprendlingen (DE)**
Erfinder: **Mersmann, Friedhelm, Ing.grad.**
**Schillerstrasse 14a**
**D-6074 Rödermark (DE)**
Erfinder: **Schnabel, Horst, Dipl.-Ing.**
**Hamburger Strasse 1-3**
**D-6326 Eschborn (DE)**

Courier Press, Leamington Spa, England.

## Schaltungsanordnung für Teilnehmerapparate in Fernsprechnebenstellenanlagen mit tonfrequenter Tastwahl

Die Erfindung betrifft ein Schaltungsanordnung für Teilnehmerapparate in Fernsprechnebenztellenanlagen mit tonfrequenter Tastwahl der Nebenstellenteilnehmer, wobei die Teilnehmerapparate neben den für die tonfrequente Tastwahl notwendigen Einrichtungen (Tastatur, Tonfrequenzsender, Umschalteeinrichtungen) noch einen die Aussendung von Gleichstromimpulsserien unterschiedlicher Länge ermöglichenden tastengesteuerten Impulssender enthalten.

In Fernsprechnebenstellenanlagen ist es üblich, von einem Teilnehmerapparate aus, neben den für den Aufbau einer Verbindung notweindigen Wählsignalen auch Steuersignale für Sonderfunktionen abzugeben. Ein in der Nebenstellentechnik wesentliches Merkmal ist die sog. Rückfrage, zu deren Steuerung ein Sonderkennzeichen benötigt wird. Dieses Sonderkennzeichen wird im allgemeinen durch eine von der Wahlinformation abweichende Maßnahme verwirklicht, indem z.B. bei Anlagen mit Impulswahlverfahren mit einer beseonderen Taste die Anschlußleitung geerdet wird. Diese Schaltmaßnahme kann jedoch bei ungünstigen Erd-Bedingungen besonders an entfernt liegenden Stellen zu Funktionsunsicherheiten führen, und es entsteht eine Unsymmetrie der Leitung.

Deshalb wird bei Anlagen, die mit Mehrfrequenz-Tastwahl arbeiten, die Erdtastenfunktion weitgehend vermieden und durch die sog. Flash-Taste ersetzt. Hier wird also auch wieder eine von diesem Mehrfrequenz-Wahlverfahren abweichende Maßnahme, nämlich eine definierte Unterbrechung des Schleifenstroms als Sonderkennzeichen benutzt.

Schaltungsanordnungen zur Erzeugung einer einzigen von einem manuellen Tastenndruck bewirkten, aber von seiner Dauer unabhängigen Schleifenstromunterbrechung (Flash-Taste) sind veröffentlicht in den DE—OS 22 18 410, 23 19 172 und 24 32 454.

Eine weitere Schaltungsanordnung, die ebenfals bei einem tonfrequenten Tastwahlverfahren angewendet wird und bei der Abgabe von Sonderkennzeichen eine definierte Schleifenstromunterbrechung bewirkt, ist beschrieben in der DE—AS 12 01 417. Diese Schleifenstromunterbrechung dient dazu, einen Empfänger für die Auswertung des nachfolgenden tonfrequenten Sonderkennzeichens an die Leitung anzuschalten.

Alle hier erwähnten Schriften beschreiben Anordnungen, die nur in der Lage sind, eine einzige Schleifenstromunterbrechung, also nur einen einzigen Gleichstromimpuls zu erzeugen.

In vielen Fällen ist es jedoch wünschenswert, bei der Rückfrage in Nebenstellenanlagen verschiedene Variationen in einfacher Weise zu steuern. So gibt es beim Einleiten der Rückfrage die Möglichkeite, die ursprüngliche Verbindung (zum Amtsteilnehmer) sprechwegemäßig nicht abzutrennen, sondern beizubehalten, so daß ein Dreiergespräch entsteht, das auch als offene Rüchfrage bezeichnet wird.

Beim Beenden eines normalen (nicht offenen) Rückfragegesprächs kann der Wunsch bestehen, daß die Rüchfrageverbindung bestehen bleibt, damit der rückfragende Teilnehmer erneut mit dem in Rüchfrage angerufenen Teilnehmer in Verbindung treten kann, wenn er zwischenzeitlich mit dem ersten Gesprächspartner verbunden war. Dieser unter dem Begriff Makeln bekannte Vorgang kann beliebig oft wiederholt werden.

Um solche Merkmale von Teilnehmerapparat aus steuern zu können, müssen voneinander unterscheidbare Sonderkennzeichen abgegeben werden. Diese Zeichen könnten z.B. auch darin bestehen, daß die eine vorhandene Sondertaste (Flash-Taste) mehrmals betätigt wird. Es ist jedoch für einen Teilnehmer schwierig, die Anzahl der Tastendrücke und die dazwischenliegenden Pausen zur richtigen Zeit so vorzunehmen, daß die gewünschte Funktion eintritt.

Es ist außerdem bekannt, tastengesteuerte Impulssender in Fernsprechapparate einzubauen, die bei Tastendruck eine der Tasten zugeordnete Impulsfolge als Wahlinformation aussenden. Eine solche Schaltungsanordnung ist dargestellt und beschrieben in einem Aufsatz mit dem Titel "Ein relaisfreies Tastwahltelefon", der erschienen ist in der "elektronik industrie" 1974 (Heft 4, Seiten 80 bis 82). Hierbei wird mit einem hochintegrierten Schaltkreis die mit Tasten vom Teilnehmer eingegebene Wahlinformation in Gleichstromimpulsserien umgesetzt, so daß solche Apparate mit Tastwahlt an mit Impulswahl arbeitende Vermittlungseinrichtungen angeschlossen werden können.

Weiterhin ist es bekannt, von einem Teilnehmerapparat aus, der tastengesteuert Impulse aussenden kann, zusätzlich auch Zeichen auszusenden für eine nach vollzogenem Verbindungsaufbau vorzunehmende Datenübertragung. Eine solche Anordnung ist beschrieben in der DE—AS 21 55 894. Hierbei wird jedoch der Verbindungsaufbau mit aus Impulsserien bestehender Wahlinformation vollzogen und anschileßend auf Zeichengabe manuell umgeschaltet.

In der DE—OS 25 06 122 ist ein Zusatzeinrichtung für einen Fernsprechapparat beschrieben, wobei ebenfalls ein Impulssender für den Aufbau einer Verbindung vorgesehen ist. Nach dem Herstellen der Verbindung wird automatisch auf einen Tonfrequenzsender umgeschaltet, der dann zusätzliche Informationen an den angewählten Teil-nehmer sendet. Dieser angewählte Teilnehmer kann auch ein Rechner sein, der die von den Tasten des Fernsprechers gesteuerten Tonfrequenzen als Daten empfängt. Die Umschaltung erfolgt durch Änderung der Polarität auf den Anschlußadern. Somit sind auf der Anlagenseite besondere Schaltanordnungen erforderlich.

Außerdem gibt es in Fernsprechnebenstellenanlagen Merkmale, die für besondere Teilnehmeranschlüsse verfügbar sind und den Bedienungskomfort erheblich erweitern und verbessern, indem diese bei aufgelegtem Handapparat aktivierbar sind. Es handelt sich beispielsweise darum, mit einem Tastendruck eine Verbindung herstellen zu können, ohne daß der Teilnehmer den Hörer abnehmen muß, um auf die Antwort zu warten. Diese bekannten Merkmale sind so aufgeführt, daß ein Rückruf erfolgt, wenn die angesteuerte Stelle sich meldet.

Bei Teilnehmeranschlüssen mit Numerschalter-Impulswahl wird dafür die am Nebenstellenapparat übliche Erdtaste benutzt, wobei die Schaltungsanordnung innerhalb des Apparates in besonderer Weise ausgeführt sein muß. Es ist mit dieser Taste aber nur eine Verbindung, beispielsweise zur Abfragestelle möglich. Sollen mehrere direkte Verbindungen auch zu anderen Teilnehmern aufgebaut werden können, so sind weitere Tasten erforderlich und es sind im allgemeinen auch zusätzliche Verbindungsadern zum Teilnehmerapparat nötig.

Da die Abgabe einer einzelnen Schleifenstromunterbrechung für die Steuerung mehrerer Sondermerkmale nicht ausreicht, das mehrmalige Betätigen einer Taste aber von der Bedienung her zu schwierig ist, besteht die Aufgabe der Erfindung darin, durch Ausnutzung eines im Fernsprechapparat neben dem Tonfrequenzsender befindlichen tastengesteuerten Impulssenders das Steuern aller Merkmale bei abgenommenem und bei aufgelegtem Handapparat mit einem einzigen Tastendruck zu ermöglichen.

Bei abgenommenem Handapparat wird diese Aufgabe dadurch gelöst, daß Wähltasten für die Abgabe von Sonderkennzeichen benutzt werden, indem durch ein über die Anschulßleitung einlaufendes tonfrequentes Signal (Freiton, Besetztton) die Wirkungsweise der Wähltastatur vom Tonfrequenzsender auf den Impulssender umgeschaltet wird.

Der mit der Erfindung erreichte Vorteil besteht darin, daß der Teilnehmer für die Steuerung eines Merkmals nur eine dafür vorgesehene Taste einmalig zu betätigen hat. Dabei kann durch zusätzliche Beschriftung der jeweiligen Wähltaste der Teilnehmer auf die zusätzliche Funktion hingewiesen werden, wodurch die Bedienung des Fernsprechapparates wesentlich erleichtert wird.

Auf der Anlageseite muß das Anschlußorgan nicht besonders ausgestattet sein, weil die normalerweise nach Beendigung der Wahl einlaufenden Tonfrequenze-Hörtöne zur Umschaltung benutzbar sind.

Die als Impulsfolgen abgegebenen Sonderkennzeichen können leicht von einer zentralen Abtasteinrichtung durch Abzählen ausgewertet werden, und die Vermittlungsanlage ist dann in der Lage, die erforderlichen Schaltmaßnahmen durchzuführen. Da die von Impulsgeber automatische erzeugten Impulse zeitlich unabhängig sind vom Verhalten des Teilnehmers, lassen sich an zentraler Stelle die Bewertungsschaltmittel auf feste Werte einstellen. Ein weiterer Vorteil besteht darin, daß z.B. beim Beenden einer Rückfrage oder beim Makeln kein Zeichenempfänger angeschaltet werden muß, wie es erforderlich wäre, wenn die Funktionstasten der Wähltastatur und die damit gesendeten Tonfrequenzen für diese Sonderfunktion ausgenutzt würden.

Da während eines Gespräches keine zum Aufbau einer Verbindung dienenden Wahlinformation benötigt werden, kann die Wähltastatur automatisch umgeschaltet werden auf den für Sonderkennzeichen vorgesehenen Impulsgeber. Dies geschieht erfindungsgemäß bei abgehenden Gesprächen durch die Auswertung der nach Wahlende anfallended Hörtöne. Hierbei muß jedoch beachtet werden, daß im Zuge eines Verbindungsaufbaues auftretende erneute Wähltöne nicht erfaßt werden. Dies kann z.B. dadurch erreicht werden, daß der Hörtonempfänger erst nach einigen Tastenbetätigungen oder nach einer vorgegebenen Zeit abgeschaltet wird. Bei ankommenden Gesprächen kann die Umschaltung der Tastatur durch ein vom Anruforgan abgeleitetes Signal bewirkt werden.

Bei Sonderkennzeichen, die eine nachfolgende Wahl erfordern (Einleiten der Rückfrage), wird die Rückschaltung der Tastatur auf den Tonfrequenzsender automatisch nach Beendigung des Sonderkennzeichens vorgenommen.

Die Lösung der gestellten Aufgabe bei aufgelegtem Handapparat erfolgt durch die im Patentanspruch 4 angegebene Schaltungsanordnung. Dabei ist es gleichgültig, ob zusätzliche Sondertasten für die Sonderkennzeichen vorgesehen sind, die fest mit dem Impulssender verbunden sind, oder ob die Wähltasten bei aufgelegtem Handapparat auf den Impulssender umgeschaltet sind.

Weiterbildungen der Erfindung zur Lösung dieser Aufgabe ergeben sich aus den Patentansprüchen 5 bis 7. Es wird in vorteilhafter Weise erreicht, daß Merkmale, die bei aufgelegtem Handapparate zu aktivieren sind, immer aus ungeradzahligen Impulsfolgen bestehen, während bei abgenommenem Handapparat Sonderkennzeichen mit geradzahligen Impulsfolgen gebildet werden. Die Wähltasten bzw. Sondertasten sind somit doppelt, d.h. mit jeweils zwei Merkmalen ausnutzbar, da die Sonderkennzeichen empfangende Abtasteinrichtung an der ungeraden Zahl von impulsen erkennt, daß das betreffende Merkmal bei aufgelegtem Handapparat zu aktivieren ist.

Einige Ausführungsbeispiele der Erfindung werden anhand von Zeichnungen nachstehend erläutert.

Es zeigt:

Fig. 1 die Anordnung von Impulssender IS und Tastwahlsender TWS mit getrennten Steuertasten ST für IS und WT für TWS

Fig. 2 die Anordnung zur Umschaltung vom Tastwahlsender auf den Impulssender mit einer Sondertaste ST

Fig. 3 die Anordnung zur automatischen Umschaltung zwischen TWS und IS

Fig. 4 die Anordnung für die Impulsgabe bei aufgelegtem Handapparat

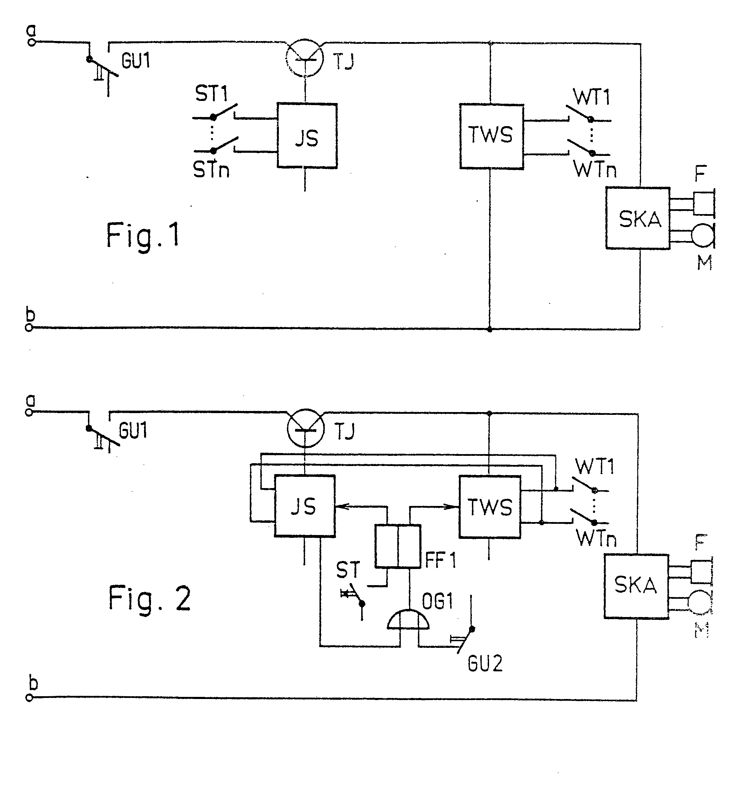

In der Fig. 1 ist ein Kontakt GU1 dargestellt, der in bekannter Weise beim Abheben des Hörers betätigt wird und einen von der Leitung a über die Sprechkreisanordnung SKA zur Leitung b verlaufenden Stromkreis schließt. Die Aussendung der Whalinformation geschieht durch das Betätigen der Wähltasten WT1 ... Wtn über den Tastwhlsender TWS, der die entsprechend den CCITT-Normen codierten Tonfrequenzen aussendet. Für die Abgabe von Sonderkennzeichen steht außerdem ein Impulssender IS zur Verfügung, der beim Betätigen einer der Sondertasten einen oder mehrere Impulse seriell abgibt und damit zum Zwecke der Schleifenstromunterbrechung den Transistor TJ steuert.

Außer den in Fig. 1 dargestellten und bereits beschriebenen Teilen sind in der Fig. 2 Schaltmittel dargestellt die eine Umschaltung von Tastwahlsender TWS auf den Impulssender IS bewirken, wenn die einzeln angeordnete Sondertaste betätigt wird. Es wird dabei das Umschalte-Flip-Flop FF1 gekippt, das somit den TWS sperrt und den IS freigibt. Die bistabile Kippstufe FF1 wird über das Gatter OG1 zurückgestellt, wenn ein eine nachfolgende Wahlhandlung verlangendes Sonderkennzeichen vollständig ausgesendet wurde. Zu diesem Zweck dient die Leitung WR. Außerdem erfolgt eine Rückstellung über den Kontakt GU2, wenn am Teilnehmerapparat der Hörer aufgelegt wird. Mit dieser Anordnung ist es möglich, die Wähltasten zur Abgabe von Sonderkennzeichen zu nutzen, indem eine manuelle Umschaltung vorgenommen wird durch Betätigen der Taste ST.

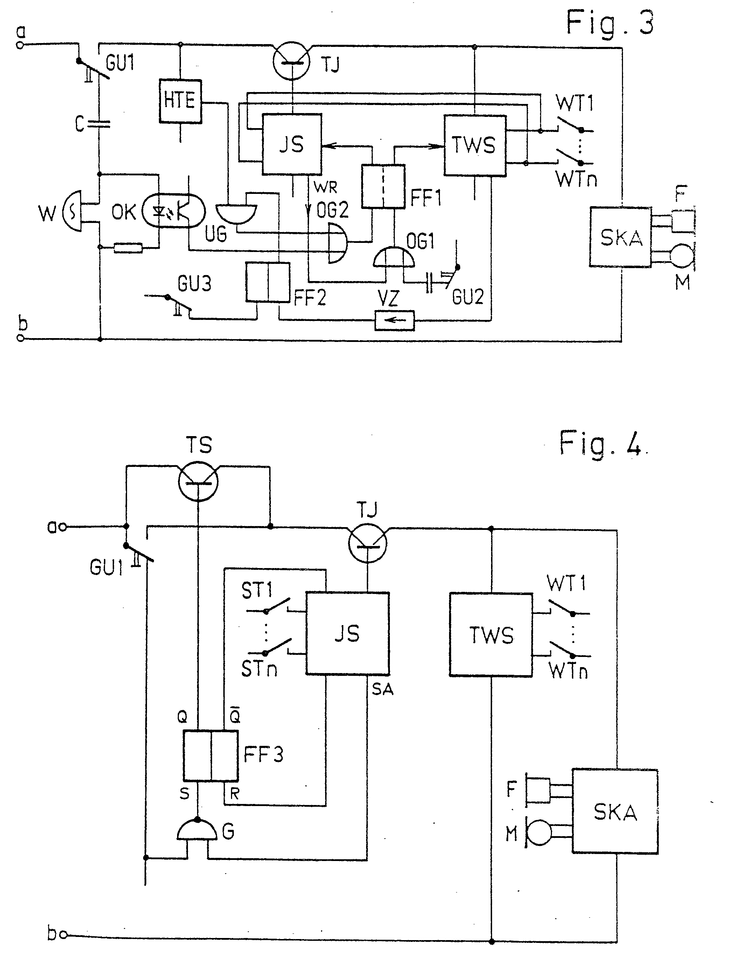

Wie eine automatisch arbeitende Umschaltung funktionieren kann, ist in Fig. 3 dargestellt. Hierbei sind folgende zusätzliche Schaltmittel zu den Fig. 2 dargestellten Anordnungen erforderlich.

Für die Ausnutzung des Anrufkriteriums zur Umschaltung auf den Impulssender ist ein Opto-Koppler vorgesehen, der über das Gatter OG2 das Umschalte-Flip-Flop FF1 einstellt. Damit ist nach Entgegennahme des Anrufes eine Funktion der Wähltasten auf den Impulssender gebeben, so daß die Einleitung einer Rückfrage bei entsprechenden Verbindungsarten direkt möglich ist. Sollte wegen eines nicht beantworteten Anrufes das FF1 sich in der Arbeitslage befinden, wenn wegen eines abgehend zu führenden Gesprächs der Hörer abgenommen wird, so kann die erforderliche Ruhestellung von FF1 durch den Kontakt GU2 bewirkt werden, wenn der Hörer vorübergehend aufgelegt wird. Eine Rückschaltung auf den Tastwahlsender ist auch durch ein Zeitglied denkbar, das in Tätigkeit tritt, wenn ein Anruf nicht beantwortet wird. Es ist denkbar, eine zusätzliche Anzeigevorrichtung anzuordnen, die anspricht, wenn die Tastatur auf den Impulssender geschaltet ist.

Um die automatische Umschaltung auch bei abgehend geführten Gesprächen zur ermöglichen, ist ein Hörtonempfänger HTE vorgesehen, der über die Gatter UG and OG2 das die Umschaltung bewirkende Flip-Flop FF1 stellt. Damit die Umschaltung nicht aufgrund eines empfangenen Wähltones vonstatten geht, wird das Gatter UG erst freigegeben, wenn eine weitere Kippstufe FF2 gekippt ist. Die Einschaltung von FF2 geschieht in Abhängigkeit von der Wähltastatur über ein Verzögerungsglied VZ, das bei jeder Aussendung eines Wählzeichens zurückgesetzt wird und nach Ablauf seiner Verzögerungszeit das FF2 setzt. Wird nun vom Hörtonempfänger ein Frei- oder Besetztton empfangen, dann erfolgt über UG und OG2 das Einschalten von FF1. Da die Wahl beendet ist, kann nun eine Betätigung der Tastatur den Impulssender zur Abgabe von Sonderkennzeichen steuern. Diese Sonderkennseichen können die Einleitung einer Rückfrage oder auch einer Aufschaltung bewirken, je nach dem welche Taste betätigt wurde.

In Fig. 4 ist die Schaltungsanordnung für die Aktivierung von Merkmalen bei aufgelegtem Handapparat dargestellt. Wenn diese Anordnung auch für den Betrieb mit aufgelegtem Handapparat benutzt werden soll, sind die Sondertasten so an den Impulssender angeschlossen, daß jeweils eine geradzahlige Anzahl von Impulsen abgegeben wird, wenn die Sondertaste bei abgenommenem Handapparat betätigt wird. Wird aber eine der Sondertasten bei aufgelegtem Handapparat betätigt, so wird zunächst durch ein vom Impulssender abgegebenes Signal SA das Gatter G erfüllt, dessen anderer Eingang an die Ruheseite des Kontaktes GU1 geschaltet ist. Über den Eingang S wird die bistabile Kippstufe FF3 in die Arbeitslage gestellt, so daß das Schaltmittel TS vom Ausgang Q Steuerstrom erhält. Dadurch wird ein Stromkreis so geschlossen wie durch Betätigen des Kontaktes beim Abnehmen des Hörers. Damit nun dieser Stromkreis beim Aussenden des ersten Impulses nicht sofort wieder unterbrochen wird, legt die bistabile Kippstufe über den Ausgang $\overline{Q}$ ein Signal an den Impulssender, wodurch eine Verzögerung der Impulsassendung bewirkt wird. Diese Verzögerung ist so bemessen, daß die in der Nebenstellenanlage zur Auswertung der Schleifenzustandsänderungen erforderliche Zeit überschritten wird. Nach Ablauf der Verzögerungszeit beginnt die Aussendung der durch das Betätigen der Sondertaste vorgegebenen Impulsfolge. Mit dem Beginn des letzten Impulses wird ein zusätzliches Signal R vom Impulssender abgegeben, womit die bistabile Kippstufe wieder in ihre Ruhelage zurückgestellt wird. Dem Schaltmittel TS wird dadurch der Steuerstrom entzogen, so daß der Stromkreis wieder dauernd geöffnet wird.

Dadurch wird mit dieser Anordnung erreicht, daß beispielsweise durch das Betätigen der Sondertaste ST1, die das Senden von zwei Impulsen bewirkt, nur ein Impuls erkannt wird, weil der letzte Impuls durch das dauernde Öffnen des Schleifenstromkreises nicht mehr erkannt werden kann.

Die in der Nebenstellenanlage angeordnete Erkennungsschaltmittel müssen ohnehin den zeitlichen Unterschied zwischen einer Kurzzeitigen Änderung (Impuls) und einer langandauerden Änderung des Schleifenzustandes einer Teilnehmeranschlußleitung unterscheiden können.

Es sind also für die Verwirklichung dieser Merkmale keine besonderen Aufwendungen erforderlich. Lediglich an zentraler Stelle ist eine wening aufwendige Logik vorzusehen für die Zuordnung und Aktivierung der Merkmale entsprechend der Anzahl der empfangenen Impulse.

## Patentansprüche

1. Schaltungsanordnung für Teilnehmerapparate in Fernsprechnebenstellenanlagen mit tonfrequenter Tastwahl der Nebenstellenteilnehmer, wobei die Teilnehmerapparate neben den für die tonfrequente Tastwahl notwendigen Einrichtungen (Tastatur, Tonfrequenzsender, Umschalteeinrichtungen) noch einen die Aussendung von Gleichstromimpulsserien unterschiedlicher Länge ermöglichenden tastengesteuerten Impulssender enthalten, dadurch gekennzeichnet, daß die einen Tonfrequenzsender steuernden Wähltasten (WT) für die Abgabe von Sonderkennzeichen benutzt werden, indem durch ein über die Anschlußleitung einlaufendes tonfrequentes Signal (Freiton, Besetztton) die Wirkungsweise der Wähltastatur von Tonfrequenzsender (TWS) auf den Impulssender (IS) umgeschaltet wird.

2. Schaltungsanordnung nach Anspruch 1, dadurch gekennzeichnet, daß die Umschaltung der Wähltastatur auf den Impulssender von einem Anrufsignal bewirkt wird.

3. Schaltungsanordnung nach den Ansprüchen 1 und 2, dadurch gekennzeichnet, daß die Zurückschaltung der Wähltastatur auf den Tonfrequenzsender nach beendeter Aussendung eines Sonderkennzeichens erfolgt, wenn aufgrund dieses Sonderkennzeichens eine nachfolgende Teilnehmeranwahl erwartet wird.

4. Schaltungsanordnung nach dem Oberbegriff des Anspruchs 1, dadurch gekennzeichnet, daß mit Hilfe eines zur Abgabe von aus jeweils geradzahligen Gleichstromimpulsfolgen bestehenden Sonderkennzeichen vorgesehenen Impulssenders (IS) beim Betätigen einer den Impulssender steuernden Taste bei aufgelegtem Handapparat an der Teilnehmerstelle zunächst ein das Fließen eines Schleifenstromes von ausreichender Stärke und Dauer ermöglichender Stromkries geschlossen wird, bevor das Aussenden der Impulsfolge in Form von Schleifenstromunterbrechungen beginnt, daß nach Aussenden des letzten Impulses die Schleife nicht wieder geschlossen wird, und somit ein Impuls weniger entsteht, als mit Betätigen der gleichen Taste bei abgenommenem Handapparate ausgesendet würde, und daß eine diese Impulse empfangende Einrichtung aus einer ungeradzahligen Anzahl von Impulsen ein bei aufgelegtem Handapparat zu verwirklichendes Merkmal erkennt.

5. Schaltungsanordnung nach Anspruch 4, dadurch gekennzeichnet, daß eine bistabile Kippstufe (FF3) vorgesehen ist, die beim Betätigen einer Sondertaste anspricht, wenn der Handapparat aufgelegt ist, und ein Schaltmittel (TS) steuert, das die Schließung eines Schleifenstromkreises unabhängig von dem vom Handapparat betätigbaren Kontakt bewirkt.

6. Schaltungsanordnung nach den Ansprüchen 4 und 5, dadurch gekennzeichnet, daß die bistabile Kippstufe eine Verzögerung des Aussendens von Impulsfolgen und damit eine genügend lange Dauer des vor der Impulssendung erfolgenden Schleifenschlusses bewirkt.

7. Schaltungsanordnung nach den Ansprüchen 4 und 5, dadurch gekennzeichnet, daß die bistabile Kippstufe mit der Aussendung des letzten Impulses zurückgestellt wird, und daß damit der durch das Schaltmittel (TS) geschlossene Stromkreis wieder dauernd geöffnet wird.

## Claims

1. A circuit arrangement for subscriber telephone instruments in Private Automatic Branch Exchanges with tone-frequency dialling, the instruments, besides the equipment needed for push-button-dialling (keyboard, tone-frequency sender, switch over facilities) consist of a key operated pulse-sender for generating d.c.-pulse series of different lengths, comprising that the dialling keys (WT) controlling a tone frequency-sender are used for transmitting special signals by switching over the influence of the key-board from the tone frequency sender (TWS) to the pulse sender (IS) caused by a tone frequency signal (ringing-tone, busy tone) arriving via the subscriber line.

2. A circuit arrangement as claimed in claim 1, comprising that the switch-over procedure is caused by an incoming ringing signal.

3. A circuit arrangement as claimed in claim 1 and 2, comprising that the dialling keyboard is switched back again to the tone-frequency sender after completing the transmission of a special signal if this special signal requires a following subscriber selection.

4. A circuit arrangement as mentioned in introduction to claim 1, comprising that with the help of the pulse sender (IS) provided for generating special signals, consisting of only even-number-d.c.-pulse series, when operating one of the keys controlling only the pulse sender with cradled handset; in doing so, first a circuit is closed in which a line current flows with sufficient force and duration before the transmission of the pulse series in the form of line current interrupts begins; and after transmitting the last pulse, the loop is not closed again, thus one pulse less is transmitted than would be by operating the same key with lifted handset; and finally a unit receiving these pulses recognizes a feature to be realized with cradled handset is wanted by the odd number of pulses.

5. A circuit arrangement as claimed in claim 4 comprising that a bistable flip flop (FF3) is provided with is activated by operating a special key with cradled handset, thereby controlling a switching unit (TS) which causes a loop circuit to be closed independently of the contact operatable by the hand set.

6. A circuit arrangement as claimed in claims 4 and 5 comprising that the bistable flip flop causes a delay before transmitting pulse series, thus causing a sufficiently long duration of the loop closure before transmitting pulses.

7. A circuit arrangement as claimed in claims 4 and 5 comprising that the bistable flip flop is reset when the last pulse is transmitted, and the circuit closed by the switching unit (TS) is opened again permanently.

**Revendications**

1. Disposition de circuits pour appareils d'abonné dans les installations téléphoniques à postes supplémentaires avec composition par touches à fréquences acoustiques des numéros d'abonné des postes supplémentaires, ces appareils d'abboné comportant, outre les dispositifs nécessaires à la composition par touches à fréquences acoustiques (clavier, émetteur de fréquences acoustiques, dispositifs de commutation), un émetteur d'impulsions commandé par touches et permettant l'émission de séries d'impulsions de courant continu de longueurs différentes, disposition caractérisée en ce que l'on utilise des touches de composition (WT) commandant un émetteur à fréquence acoustique pour l'émission d'indicatifs spéciaux et en ce que, au moyen d'un signal à fréquence acoustique (tonalité, signal d'occupation) arrivant par la ligne de branchement, le mode de fonctionnement du clavier de composition est commuté d l'émetteur à fréquence acoustique (TWS) à l'émetteur d'impulsions (IS).

2. Disposition selon la revendication 1, caractérisée en ce que la commutation du clavier de composition sur l'émetteur d'impulsion est assurée par un signal d'appel.

3. Disposition selon l'une quelconque des revendications 1 et 2, caractérisée en ce que la commutation inverse du clavier de composition sur l'émetteur à fréquences acoustiques après la fin de l'émission d'un indicatif spécial est réalisée lorsque, du fait de cet indicatif spécial, on attend la composition subséquente d'un numéro d'abonné.

4. Disposition de circuits pour appareils d'abonné dans les installations téléphoniques à postes supplémentaires avec composition par touches à fréquences acoustiques des numéros d'abonnés des poste supplémentaires, ces appareils d'abonné comportant, outre les dispositifs nécessaires à la composition par touches à fréquences acoustiques (clavier, émetteur de fréquences acoustiques, dispositifs de commutation), un émetteur d'impulsions commandé par touches et permettant l'émission de séries d'impulsions de courant continu de longueurs différentes, disposition caractérisée en ce qu'à l'aide d'un émetteur d'impulsions (IS) susceptible d'émettre, lorsque l'on actionne une touche qui commande l'émetteur d'impulsions alors que le combiné est raccroché, des indicatifs spéciaux qui sont formés chacun de suites d'impulsions de courant continu en nombre pair, un circuit du poste d'abonné, permettant le passage d'un courant de boucle d'intensité et de durée suffisantes se ferme tout d'abord, avant que ne commence l'émission de la suite d'impulsions sous la forme d'interruptions du courant de boucle, en ce qu'après l'émission de la dernière impulsion, la boucle ne se referme pas, et qu'ainsi il se produit une impulsion de moins que si l'on actionnait la même touche alors que le combiné est décroché, et en ce qu'un dispositif recevant ces impulsions reconnaît, dans un nombre impair d'impulsions, une caractéristique qu'il s'agit de réaliser alors que le combiné est raccroché.

5. Disposition selon la revendication 4, caractérisée en ce qu'elle comporte une bascule bistable (FF3) qui répond lorsque l'on actionne une touche spéciale alors que le combiné est raccroché et qui commande un moyen de commutation (TS), lequel assure la fermeture d'un circuit de boucle indépendamment du contact pouvant être actionné par le combiné.

6. Disposition selon l'une des revendications 4 et 5, caractérisée en ce que la bascule bistable produit un retard de l'émission de suites d'impulsions et assure donc une durée suffisamment longue de la fermeture de la boucle qui se produit avant l'émission d'impulsions.

7. Disposition selon l'une des revendications 4 et 5, caractérisée en ce que la bascule bistable est réarmée lors d l'émission de la dernière impulsion et qu'ainsi, le circuit fermé par le moyen de commutation (TS) s'ouvre à nouveau en permanence.

Fig.1

Fig. 2

0 004 867

Fig. 3

Fig. 4.

2